# EUROPÄISCHE PATENTSCHRIFT

(11) **EP 3 682 217 B1**
(45) Veröffentlichungstag und Bekanntmachung des Hinweises auf die Patenterteilung: **11.12.2024**
(21) Anmeldenummer: 18769122.5
(22) Anmeldetag: 06.09.2018
(51) Int. Cl.: G01M 3/28, E03B 7/07

(54) **VERFAHREN ZUM DETEKTIEREN EINER LECKAGE IN EINER FLÜSSIGKEITSLEITUNG SOWIE WASSERZÄHLER MIT EINER STEUERUNG ZUR DURCHFÜHRUNG DES VERFAHRENS**
METHOD FOR DETECTING A LEAK IN A LIQUID LINE, AND WATER METER HAVING A CONTROLLER FOR CARRYING OUT THE METHOD
PROCÉDÉ POUR DÉTECTER UNE FUITE DANS UNE CONDUITE DE LIQUIDE ET COMPTEUR D'EAU COMPORTANT UNE COMMANDE POUR METTRE EN OEVRE LE PROCÉDÉ

(30) Priorität: 15.09.2017 DE 102017121489
(43) Veröffentlichungstag der Anmeldung: 22.07.2020
(73) Patentinhaber: Grohe AG, 58653 Hemer (DE)
(72) Erfinder: DEPIERE, Bert, 3150 Wakkerzeel (BE); GAIDA, Waldemar, 40549 Düsseldorf (DE); SCHÖNBECK, Heiko, 58675 Hemer (DE); MIELKE, Achim, 32457 Porta Westfalica (DE); MEIER, Torsten, 41469 Neuss (DE); RADERMACHER, Daniel, 40489 Düsseldorf (DE)
(86) Internationale Anmeldenummer: PCT/EP2018/074027
(87) Internationale Veröffentlichungsnummer: WO 2019/052893

(56) Entgegenhaltungen:
- EP-A1- 2 940 447
- WO-A2-2014/203246
- WO-A2-2014/203246

## Beschreibung

Die vorliegende Erfindung betrifft ein Verfahren zum Detektieren einer Leckage in einer Flüssigkeitsleitung sowie einen Wasserzähler mit einer Steuerung zum Durchführen des Verfahrens gemäß dem Oberbegriff des Patentanspruchs 1. Ein solches Verfahren ist beschrieben in der Druckschrift WO2014/203246A1. Die Erfindung dient insbesondere der Verhinderung von Wasserschäden durch austretende Flüssigkeiten.

In Gebäuden ist regelmäßig eine Vielzahl von Wasserleitungen verlegt, die von einer Flüssigkeitsquelle, wie zum Beispiel einem öffentlichen Wasserversorgungsnetz, zu unterschiedlichen Verbrauchern, wie zum Beispiel Sanitärarmaturen, Spülmaschinen oder Waschmaschinen, führen. An diesen Flüssigkeitsleitungen können Leckagen beispielsweise in Form von Rohrbrüchen oder Rissen entstehen, durch die Flüssigkeit austreten kann. Die austretende Flüssigkeit kann an den Austrittsstellen zu großen Schäden an dem Gebäude, einem Mauerwerk und/oder an Einrichtungen des Gebäudes führen.

Leckagen mit großen Flüssigkeitsaustritten, wie diese zum Beispiel bei Rohrbrüchen auftreten, sind beispielsweise mittels Durchflusssensoren , detektierbar. Solche Durchflusssensoren benötigen einen sehr großen Messbereich von bis zu 100 l/min (Liter pro Minute). Dies hat zur Folge, dass die Durchflusssensoren zur Bestimmung von geringen Flüssigkeitsaustritten, insbesondere von unter 0,8 l/min, wie diese zum Beispiel bei Tropfleckagen auftreten, nicht geeignet sind. Solche Tropfleckagen können daher lange unentdeckt bleiben, sodass die austretende Flüssigkeit beträchtliche Schäden beispielsweise durch Schimmelbildung verursachen kann.

Zudem können Schwellenwerte für eine Durchflussgeschwindigkeit der Flüssigkeit beobachtet werden, bei deren Überschreiten von einem Rohrbruch ausgegangen wird. Zur Vermeidung von Fehlalarmen müssen diese Schwellenwerte vergleichsweise hoch eingestellt werden. Durch diese Verfahren sind daher keine Leckagen detektierbar, bei denen geringere Flüssigkeitsmengen als bei einem Rohrbruch auftreten.

Weiter ist problematisch Leckagen von typischerweise in Versorgungseinheiten, wie zum Beispiel einer Wohnung, einem Hotelzimmer oder einem Gebäude, vorkommenden Flüssigkeitsverbräuchen zu unterscheiden.

Aufgabe der Erfindung ist daher, die mit Bezug auf den Stand der Technik geschilderten Probleme zumindest teilweise zu lösen und insbesondere ein Verfahren zum Detektieren einer Leckage in einer Flüssigkeitsleitung anzugeben, mit dem Leckagen mit einer höheren Zuverlässigkeit detektierbar sind. Darüber hinaus soll auch ein Wasserzähler angegeben werden, mittels dem Leckagen mit einer höheren Zuverlässigkeit detektierbar sind.

Diese Aufgaben werden gelöst mit einem Verfahren und einem Wasserzähler gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Detektieren einer Leckage bei, das zumindest die folgenden Schritte aufweist:
a) Erfassen einer Durchflussmenge einer Flüssigkeit durch eine Leitung bei einer Vielzahl von Flüssigkeitsentnahmevorgängen;
b) Vergleichen der Durchflussmengen der Flüssigkeit der jeweiligen Flüssigkeitsentnahmevorgänge mit einem Alarmwert;
c) Ausgabe eines Alarmsignals, wenn die Durchflussmenge der Flüssigkeit eines Flüssigkeitsentnahmevorgangs den Alarmwert übersteigt;
d) Anpassen des Alarmwerts in Abhängigkeit einer (absoluten oder relativen) Häufigkeit des Auftretens der Durchflussmengen der Flüssigkeit der Flüssigkeitsentnahmevorgänge oberhalb eines Anpassungswerts.

Das Verfahren dient zum Detektieren einer Leckage in einer Flüssigkeitsleitung, die insbesondere zumindest teilweise in einem Gebäude von einer Flüssigkeitsquelle, wie zum Beispiel einem öffentlichen Wasserversorgungsnetz, hin zu mindestens einem Verbraucher, wie zum Beispiel einer Sanitärarmatur, einer Spülmaschine oder einer Waschmaschine, verläuft. Die Flüssigkeitsleitung besteht insbesondere zumindest teilweise aus Metall, wie zum Beispiel Kupfer. Die Flüssigkeitsleitung bzw. Verrohrung weist zudem insbesondere einen Durchmesser von 10 mm (Millimeter) bis 30 mm auf.

Zum Detektieren einer Leckage an der Flüssigkeitsleitung wird in Schritt a) eine Durchflussmenge einer Flüssigkeit durch eine Leitung bei einer Vielzahl von Flüssigkeitsentnahmevorgängen erfasst. Ein Flüssigkeitsentnahmevorgang kann beispielsweise durch einen Verbrauchsvorgang der Flüssigkeit, wie zum Beispiel einer Entnahme der Flüssigkeit aus einer Sanitärarmatur, eine Verwendung einer Waschmaschine, die Verwendung eines WCs und/oder die Verwendung einer Dusche erfolgen. Ein einzelner Flüssigkeitsentnahmevorgang kann als "gestartet" angesehen werden, wenn eine Durchflussgeschwindigkeit der Flüssigkeit durch die Flüssigkeitsleitung von 0 l/min (Liter pro Minute) auf einen positiven Wert steigt. Ein einzelner Flüssigkeitsentnahmevorgang kann als "beendet" angesehen werden, wenn die Durchflussgeschwindigkeit der Flüssigkeit durch die Flüssigkeitsleitung wieder auf 0 l/min sinkt. Sollten sich daher mehrere der Verbrauchsvorgänge zeitlich überschneiden, werden diese als ein einziger Flüssigkeitsentnahmevorgang betrachtet. Für jeden Flüssigkeitsentnahmevorgang wird die Durchflussmenge der Flüssigkeit durch die Flüssigkeitsleitung erfasst, also die Menge der Flüssigkeit, die während eines Flüssigkeitsentnahmevorgangs durch die Flüssigkeitsleitung strömt.

Hierzu können insbesondere eine Dauer des Flüssigkeitsentnahmevorgangs bzw. eine Durchflussdauer der Flüssigkeit durch die Flüssigkeitsleitung je Flüssigkeitsentnahmevorgang und die (insbesondere durchschnittliche) Durchflussgeschwindigkeit der Flüssigkeit durch die Flüssigkeitsleitung während des Flüssigkeitsentnahmevorgangs erfasst werden. Die Durchflussmenge, die Dauer des Flüssigkeitsentnahmevorgangs, die Durchflussdauer der Flüssigkeit durch die Flüssigkeitsleitung je Flüssigkeitsentnahmevorgang und/oder die (insbesondere durchschnittliche) Durchflussgeschwindigkeit der Flüssigkeit durch die Flüssigkeitsleitung während des Flüssigkeitsentnahmevorgangs können für jeden Flüssigkeitsentnahmevorgang, beispielsweise in einer (elektronischen) Speichervorrichtung, als Datensatz gespeichert werden. Zur Erfassung dieser Werte können beispielsweise Durchflusssensoren und/oder Zeitmesseinrichtungen verwendet werden.

Jeder Flüssigkeitsentnahmevorgang kann als Punkt in einem (Punkt-)Diagramm bzw. Verbrauchsfeld dargestellt werden. Das Diagramm wird durch eine x-Achse und eine y-Achse aufgespannt, die aufeinander senkrecht stehen. Auf der x-Achse ist insbesondere die Dauer des Flüssigkeitsentnahmevorgangs bzw. die Durchflussdauer der Flüssigkeit durch die Flüssigkeitsleitung je Flüssigkeitsentnahmevorgang beispielsweise in Minuten und auf der y-Achse die (insbesondere durchschnittliche) Durchflussgeschwindigkeit der Flüssigkeit durch die Flüssigkeitsleitung während des Flüssigkeitsentnahmevorgangs in l/min aufgetragen. Die Position des Punkts des jeweiligen Flüssigkeitsentnahmevorgangs in dem Diagramm wird somit durch die (insbesondere durchschnittliche) Durchflussgeschwindigkeit der Flüssigkeit durch die Flüssigkeitsleitung und die Dauer des Flüssigkeitsentnahmevorgangs bzw. die Durchflussdauer der Flüssigkeit durch die Flüssigkeitsleitung des jeweiligen Flüssigkeitsentnahmevorgangs bestimmt. Damit kann jeder Flüssigkeitsentnahmevorgang als ein Ereignis in dem Diagramm bzw. dem Verbrauchsfeld gespeichert werden.

Danach bzw. anschließend werden in Schritt b) die Durchflussmengen der Flüssigkeit der jeweiligen Flüssigkeitsentnahmevorgänge mit einem Alarmwert verglichen. Bei dem Alarmwert handelt es sich insbesondere um einen Schwellenwert, oberhalb dem von einem unnormal bzw. unerwartet hohem Verbrauchswert für die überwachte Versorgungseinheit ausgegangen wird. Der Alarmwert ist in dem Diagramm beispielsweise als Graph und/oder Linie darstellbar. Der Vergleich zwischen den Durchflussmengen der Flüssigkeit der jeweiligen Flüssigkeitsentnahmevorgänge mit dem Alarmwert kann somit (auch) durch einen Vergleich der relativen Lage des Punkts des jeweiligen Flüssigkeitsentnahmevorgangs zu dem Graph oder der Linie des Alarmwerts erfolgen. Befindet sich der Punkt eines Flüssigkeitsentnahmevorgangs beispielsweise rechts neben dem Graph oder der Linie des Alarmwerts, übersteigt die Durchflussmenge der Flüssigkeit des Flüssigkeitsentnahmevorgangs den Alarmwert. Befindet sich der Punkt des Flüssigkeitsentnahmevorgangs beispielsweise links neben dem Graph und/oder der Linie des Alarmwerts, unterschreitet die Durchflussmenge der Flüssigkeit des Flüssigkeitsentnahmevorgangs den Alarmwert.

Übersteigt die Durchflussmenge der Flüssigkeit eines Flüssigkeitsentnahmevorgangs den Alarmwert, wird in Schritt c) ein Alarmsignal ausgegeben. Bei dem Alarmsignal kann es sich beispielsweise um eine Mitteilung an einen Bewohner der Versorgungseinheit, einem Überwachungssystem, einer Kontrolleinheit und/oder einem Stellglied der Flüssigkeitsleitung handeln. Die Mitteilung kann zum Beispiel in Form einer elektronischen Nachricht an ein Mobiltelefon des Bewohners gesendet werden. Zudem kann es sich bei dem Alarmsignal auch um ein akustisches und/oder optisches Alarmsignal handeln, mittels dem dem Bewohner ein ungewöhnlicher (insbesondere unerwartet hoher) Flüssigkeitsverbrauch signalisiert wird. Der Bewohner kann hieraufhin beispielsweise ein Ventil, mittels dem die Flüssigkeitsleitung verschließbar ist, manuell schließen, um den Austritt der Flüssigkeit aus einer möglichen Leckage zu verhindern. Weiterhin kann das Ventil optional auch automatisch mittels eines Steuerungssignals geschlossen werden. Bei dem Ventil kann es sich beispielsweise um ein Magnetventil handeln, dass insbesondere durch eine Steuerung (automatisch und/oder elektrisch) betätigbar ist.

In Schritt d) wird der Alarmwert in Abhängigkeit einer (absoluten oder relativen) Häufigkeit des Auftretens der Durchflussmengen der Flüssigkeit der Flüssigkeitsentnahmevorgänge oberhalb eines Anpassungswerts angepasst. Dies bedeutet, dass zunächst bestimmt wird, wie häufig die Durchflussmengen der Flüssigkeit der einzelnen Flüssigkeitsentnahmevorgänge oberhalb des (vorgebbaren) Anpassungswerts liegen. Erreicht die Häufigkeit innerhalb einer (vorgebbaren) Zeitspanne (zum Beispiel 6 Stunden) beispielsweise einen (vorgebbaren) Häufigkeitswert (zum Beispiel 50 % der Durchflussmengen der Flüssigkeit der einzelnen Flüssigkeitsentnahmevorgänge oberhalb des (vorgebbaren) Anpassungswerts), kann der Alarmwert beispielsweise um einen (vorgebbaren) Wert und/oder Faktor (beispielsweise 10 %) vergrößert werden. Dies kann bedeuten, dass der Graph bzw. die Linie des Alarmwerts in dem Diagramm nach rechts verschoben wird. Erreicht die Häufigkeit innerhalb der (vorgebbaren) Zeitspanne (zum Beispiel 6 Stunden) beispielsweise den (vorgebbaren) Häufigkeitswert nicht oder liegt dieser sogar bei "0" (d. h. keine der Durchflussmengen der Flüssigkeit der einzelnen Flüssigkeitsentnahmevorgänge liegt oberhalb des (vorgebbaren) Anpassungswerts), kann der Alarmwert beispielsweise um einen (vorgebbaren) Wert oder Faktor (beispielsweise 10 %) verkleinert werden. Dies kann bedeuten, dass der Graph oder die Linie des Alarmwerts in dem Diagramm nach links verschoben wird. Bei dem Anpassungswert kann es sich somit um einen Schwellenwert handeln, bei dessen Überschreiten mit der (vorgebbaren) Häufigkeit die Anpassung des Alarmwerts vorgenommen wird. Die Anpassung kann zudem insbesondere nur durchgeführt werden, wenn eine Mindestanzahl von Flüssigkeitsentnahmevorgängen, beispielsweise mindestens 10 Flüssigkeitsentnahmevorgänge vorliegen. Weiterhin kann die Anpassung beispielsweise viermal täglich (zum Beispiel um 00:00 Uhr, 06:00 Uhr, 12:00 Uhr und 18:00 Uhr), stattfinden. Weiterhin kann vorgesehen sein, dass der Anpassungswert niemals unter einen (vorgebbaren) Mindestanpassungswert verkleinert wird und/oder niemals über einen (vorgebbaren) Maximalanpassungwert vergrößert wird. Der Anpassungswert ist in dem Diagramm ebenfalls beispielsweise als Graph und/oder Linie darstellbar. Befindet sich der Punkt eines Flüssigkeitsentnahmevorgangs beispielsweise rechts neben dem Graph oder der Linie des Anpassungswerts, übersteigt die Durchflussmenge der Flüssigkeit des Flüssigkeitsentnahmevorgangs den Anpassungswert. Befindet sich der Punkt des Flüssigkeitsentnahmevorgangs beispielsweise links neben dem Graph oder der Linie des Anpassungswerts, unterschreitet die Durchflussmenge der Flüssigkeit des Flüssigkeitsentnahmevorgangs den Anpassungswert. Der Anpassungswert ist insbesondere niedriger als der Alarmwert. Dies bedeutet unter anderem auch, dass sich der Graph oder die Linie des Anpassungswerts in dem Diagramm insbesondere links von dem Graph oder der Linie des Alarmwerts befindet. Durch den Schritt d) wird der Alarmwert somit an die typischerweise in der Verbrauchseinheit vorkommenden Durchflussmengen der Flüssigkeit durch die Flüssigkeitsleitung in einem Flüssigkeitsentnahmevorgang angepasst, sodass Leckagen mit einer höheren Zuverlässigkeit detektierbar sind.

Wie bereits vorstehend erläutert, kann in Schritt a) eine (durchschnittliche) Durchflussgeschwindigkeit der Flüssigkeit und eine Durchflussdauer der Flüssigkeit je Flüssigkeitsentnahmevorgang erfasst werden. Die (durchschnittliche) Durchflussgeschwindigkeit der Flüssigkeit und die Durchflussdauer der Flüssigkeit je Flüssigkeitsentnahmevorgang kann (für jedes Ereignis) in einem (Punkt-)Diagramm erfasst werden.

Bei einer Anpassung des Alarmwerts in Schritt d) kann der Anpassungswert in Abhängigkeit des Alarmwerts angepasst werden. Dies bedeutet insbesondere, dass der Anpassungswert (ebenfalls) vergrößert oder verkleinert wird, wenn der Alarmwert vergrößert oder verkleinert wird. Beispielsweise kann der Anpassungswert um denselben Wert oder denselben Faktor wie der Alarmfaktor angepasst werden. Weiterhin kann dies bedeuten, dass der Graph oder die Linie des Anpassungswerts in dem Diagramm in dieselbe Richtung wie der Graph oder die Linie des Alarmwerts und/oder parallel zu dem Graph oder der Linie des Alarmwerts verschoben wird.

Zumindest der Anpassungswert oder der Alarmwert kann für eine Mehrzahl von Bereichen der Durchflussgeschwindigkeit der Flüssigkeit separat anpassbar sein. Hierzu können eine Mehrzahl von Bereichen, beispielsweise ein niedriger Bereich, ein mittlerer Bereich und ein hoher Bereich, der Durchflussgeschwindigkeit der Flüssigkeit definiert werden, für die der Anpassungswert und/oder der Alarmwert separat bzw. individuell anpassbar ist.

Die Detektion von Leckagen umfasst eine Messung eines Drucks der Flüssigkeit in der Leitung umfassen. Durch die Messung des Drucks der Flüssigkeit in der Leitung können beispielsweise Mikroleckagen mit Durchflussgeschwindigkeiten der Flüssigkeit durch die Flüssigkeitsleitung von beispielsweise unter 0,8 l/min, bevorzugt 0,05 l/min bis 0,8 l/min und/oder Tropfleckagen mit Durchflussgeschwindigkeit der Flüssigkeit durch die Flüssigkeitsleitung von beispielsweise unter 0,2 l/h (Liter pro Stunde) detektiert werden. Die derart geringen Durchflussmengen solcher Mikroleckagen und Tropfleckagen sind ggf. durch bereits verbaute Durchflusssensoren nicht erfassbar. Die Detektion von Tropfleckagen kann insbesondere einmal pro Tag erfolgen, beispielsweise zu einer Uhrzeit, zu der die Durchflussgeschwindigkeit der Flüssigkeit in der Flüssigkeitsleitung regelmäßig oder üblicherweise 0 l/min beträgt. Weiterhin kann für die Messung des Drucks ein Druckraum in der Flüssigkeitsleitung durch Schließen des Ventils, bei dem es sich beispielsweise um ein Hauptwasserventil handeln kann, ausgebildet werden. Das Ventil kann beispielsweise für 30 Sekunden erfolgen. Wird während der Messung ein Verbrauchsvorgang ausgelöst, ist dies durch einen sehr starken Druckabfall in dem Druckraum erkennbar. In diesem Fall kann das Ventil umgehend geöffnet und die Messung abgebrochen werden. Wird bei zwei aufeinanderfolgenden Messungen ein (geringer) Druckabfall (von beispielsweise mehr als 500 mbar (Millibar)) in dem Druckraum der Flüssigkeitsleitung festgestellt, deutet dies auf eine Tropfleckage hin. Zur Detektion einer Mikroleckage kann die Messung des Drucks der Flüssigkeit in der Flüssigkeitsleitung mehrmals täglich, beispielsweise zehnmal pro Tag, erfolgen, wobei ein gemessener Druckabfall bei mehreren aufeinanderfolgenden Messvorgängen, beispielsweise drei Messvorgängen, auf einen ungewöhnlichen konstanten Durchfluss geringer Durchflussmengen der Flüssigkeit durch die Flüssigkeitsleitung und somit eine Leckage hindeuten. In beiden Fällen kann ebenfalls ein Alarmsignal gemäß Schritt c) ausgegeben werden.

Es kann vorgesehen sein, dass die Detektion von Leckagen eine Messung einer Durchflussgeschwindigkeit der Flüssigkeit durch die Flüssigkeitsleitung umfasst und wobei ein Alarmsignal ausgegeben wird, wenn die Durchflussgeschwindigkeit der Flüssigkeit einen ersten Schwellenwert übersteigt. Der erste Schwellenwert kann beispielsweise 20 l/min bis 100 l/min, bevorzugt 50 l/min betragen. Liegt die gemessene Durchflussgeschwindigkeit der Flüssigkeit durch die Flüssigkeitsleitung oberhalb dieses (sehr hohen) ersten Schwellenwerts, deutet dies auf einen Rohrbruch hin. Das Ventil kann in diesem Fall automatisch geschlossen werden und/oder ein Alarmsignal gemäß Schritt c) ausgegeben werden.

Ein Alarmsignal kann ausgegeben werden, wenn in Schritt a) die Durchflussmenge einen zweiten Schwellenwert übersteigt. Insbesondere wird ein Alarmsignal ausgegeben, wenn in Schritt a) die Durchflussmenge eines einzigen Flüssigkeitsentnahmevorgangs den zweiten Schwellenwert übersteigt. Der zweite Schwellenwert kann beispielsweise 100 Liter bis 2.000 Liter, bevorzugt 300 Liter, betragen.

Zumindest der erste Schwellenwert oder der zweite Schwellenwert kann einstellbar sein. Dies bedeutet insbesondere, dass der erste Schwellenwert und/oder der zweite Schwellenwert für unterschiedliche Verbrauchseinheiten anpassbar ist.

Einem weiterem Aspekt folgend wird auch ein Wasserzähler mit einem Ventil, einem Durchflusssensor für eine Flüssigkeit und einem Drucksensor für eine Flüssigkeit, die datenleitend mit einer Steuerung verbunden sind, angegeben, wobei die Steuerung zur Durchführung eines hier erläuterten Verfahrens eingerichtet ist.

Mittels des Wasserzählers ist insbesondere ein Wasserverbrauch in einer Verbrauchseinheit, wie zum Beispiel einem Gebäude, einer Wohnung oder einem Hotelraum bestimmbar, sodass eine Flüssigkeit, insbesondere Wasser, verbrauchsabhängig abrechenbar ist. Der Wasserzähler ist insbesondere in einer Flüssigkeitsleitung angeordnet, über die die Flüssigkeit von einer Flüssigkeitsquelle zu zumindest einem Verbraucher führbar ist. Ferner weist der Wasserzähler ein Ventil, mit dem die Flüssigkeitsleitung verschließbar ist, einen Durchflusssensor, mit dem ein Flüssigkeitsdurchfluss durch die Flüssigkeitsleitung bestimmbar ist, und einen Drucksensor, mit dem ein Druck beziehungsweise Druckverlauf in der Flüssigkeitsleitung bestimmbar ist, auf, die datenleitend (per Kabelverbindung und/oder Funkverbindung) mit einer Steuerung verbunden sind. Bei der Steuerung handelt es sich insbesondere um einen Mikrocontroller. Die Steuerung ist zur Durchführung des erfindungsgemäßen Verfahrens eingerichtet und vorgesehen. Für weitere Einzelheiten wird auf die Beschreibung des erfindungsgemäßen Verfahrens verwiesen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Elemente in den Figuren mit denselben Bezugszeichen versehen. Es zeigen beispielhaft und schematisch:
- Fig. 1:: eine Darstellung eines Verlaufs einer Durchflussgeschwindigkeit einer Flüssigkeit durch eine Flüssigkeitsleitung;
- Fig. 2:: ein (Punkt-)Diagramm;
- Fig. 3:: das (Punkt-)Diagramm mit einer ersten Anpassung des Alarmwerts und des Anpassungswerts;
- Fig. 4:: das (Punkt-)Diagramm mit einer zweiten Anpassung des Alarmwerts und des Anpassungswerts;
- Fig. 5:: das (Punkt-)Diagramm mit einer dritten Anpassung des Alarmwerts und des Anpassungswerts;
- Fig. 6:: das (Punkt-)Diagramm mit einer vierten Anpassung des Alarmwerts und des Anpassungswerts; und
- Fig. 7:: ein Gebäude mit einem Wasserzähler.

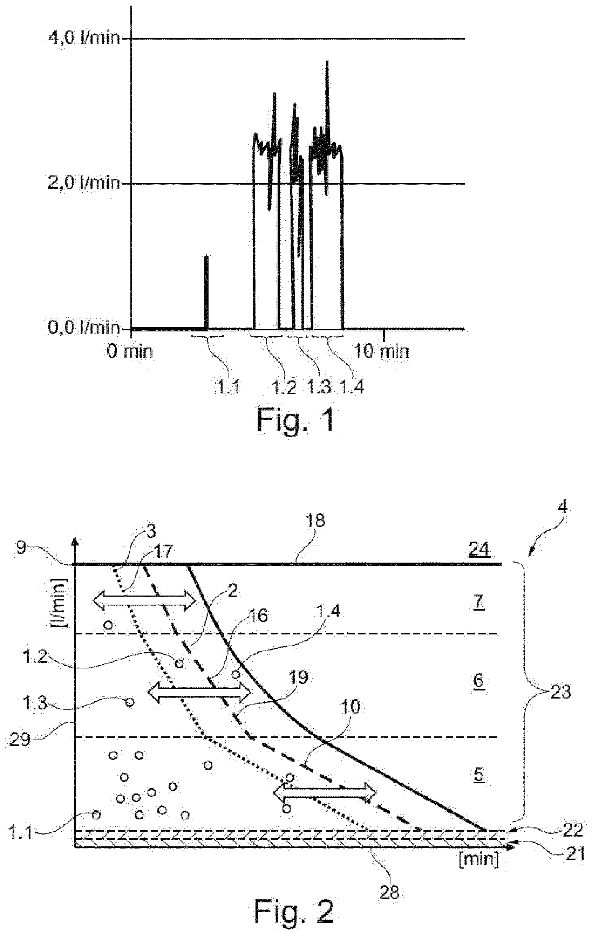

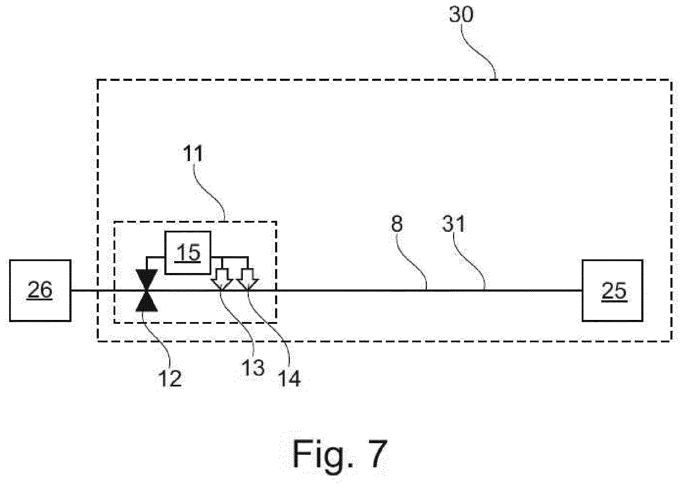

Die Fig. 1 zeigt eine Darstellung eines erfassten Verlaufs einer Durchflussgeschwindigkeit einer Flüssigkeit durch eine (in der Fig. 7 gezeigte) Flüssigkeitsleitung 8. Der Graph 27 stellt dabei die Durchflussgeschwindigkeit der Flüssigkeit durch die Flüssigkeitsleitung 8 in l/min über eine bestimmte Zeitspanne dar. Zu erkennen sind vier Flüssigkeitsentnahmevorgänge 1.1, 1.2, 1.3 und 1.4 (jeweils als separates Ereignis), die jeweils unterschiedliche Dauern und unterschiedliche Verläufe der Durchflussgeschwindigkeiten aufweisen.

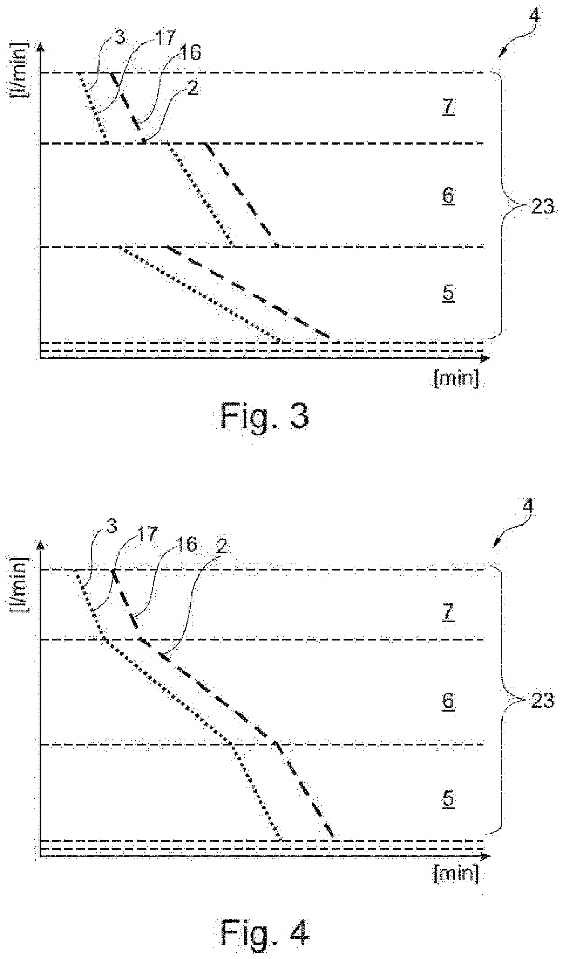

Die vier Flüssigkeitsentnahmevorgänge 1.1, 1.2, 1.3 und 1.4 sind in der Fig. 2 als Punkte in einem Diagramm 4 dargestellt. Das Diagramm 4 weist eine x-Achse 28, auf der die Dauer in Minuten, und eine y-Achse 29 auf, auf der die Durchflussgeschwindigkeit in l/min aufgetragen ist. Die Positionen der Flüssigkeitsentnahmevorgänge 1.1, 1.2, 1.3 und 1.4 in dem Diagramm 4 ergeben sich somit aus der Dauer und der (durchschnittlichen) Durchflussgeschwindigkeit der Flüssigkeiten in den jeweiligen Flüssigkeitsentnahmevorgängen 1.1, 1.2, 1.3 und 1.4. Die Durchflussgeschwindigkeit der Flüssigkeiten auf der y-Achse ist in einen ersten Bereich 21, beispielsweise einen Tropfleckagebereich, einen zweiten Bereich 22, beispielsweise einen Mikroleckagebereich, einen dritten Bereich 23, beispielsweise für mittlere Durchflussgeschwindigkeiten, und einen vierten Bereich 24, beispielsweise für hohe Durchflussgeschwindigkeiten, unterteilt. Der erste Bereich 21 erstreckt sich beispielsweise von 0 l/min bis 0,00333 l/min (0,2 l/h), der zweite Bereich 22 von 0,00333 l/min (0,2 l/h) bis 0,8 l/min, der dritte Bereich 23 von 0,8 l/min bis 50 l/min und der vierte Bereich 24 von 50 l/min bis unendlich. Der dritte Bereich 23 ist wiederum in einen unteren Bereich 5, einen mittleren Bereich 6 und einen hohen Bereich 7 unterteilt. Der untere Bereich 5, der mittlere Bereich 6 und der hohe Bereich 7 können gleichmäßig über den dritten Bereich 23 verteilt sein. Weiterhin kann der untere Bereich 5 circa 40 % des dritten Bereichs 23, der mittlere Bereich 6 circa 40 % des dritten Bereichs 23 und der hohe Bereich 7 circa 20 % des dritten Bereichs 23 bilden. Zudem kann sich der untere Bereich 5 von 0,8 l/min bis 20 l/min, der mittlere Bereich 6 von 20 l/min bis 40 l/min und der hohe Bereich 7 von 40 l/min bis 50 l/min erstrecken. In das Diagramm 4 sind zudem eine erste Linie 16 für einen Alarmwert 2, eine zweite Linie 17 für einen Anpassungswert 3, eine horizontale dritte Linie 18 für einen ersten Schwellenwert 9 der Durchflussgeschwindigkeit, und eine vierte Linie 19 für einen zweiten Schwellenwert 10 für eine Durchflussmenge der Flüssigkeit durch die Flüssigkeitsleitung 8 dargestellt. Zu erkennen ist, dass sich die Flüssigkeitsentnahmevorgänge 1.1 und 1.3 links von der ersten Linie 16 für den Alarmwert 2 und links neben der zweiten Linie 17 für den Anpassungswert 3 befinden. Dies bedeutet, sich die Durchflussmengen und die Durchflussgeschwindigkeiten der Flüssigkeit innerhalb der Flüssigkeitsentnahmevorgänge 1.1 und 1.3 unterhalb des Alarmwerts 2 und des Anpassungswerts 3 befinden. Der Flüssigkeitsentnahmevorgang 1.4 befindet sich rechts von der ersten Linie 16 für den Alarmwert 2. Dies bedeutet, dass die Durchflussmenge und die Durchflussgeschwindigkeit der Flüssigkeit innerhalb des Flüssigkeitsentnahmevorgangs 1.4 den Alarmwert 2 übersteigt, sodass gemäß Schritt c) ein Alarmsignal ausgegeben wird. Weiterhin ist zu erkennen, dass sich die Flüssigkeitsentnahmevorgänge 1.2 und 1.4 rechts von der zweiten Linie 17 des Anpassungswerts 3 befinden. Dies bedeutet, dass die Durchflussmengen und die Durchflussgeschwindigkeit der Flüssigkeit innerhalb der Flüssigkeitsentnahmevorgänge 1.2 und 1.4 oberhalb des Anpassungswerts 3 liegen. In Schritt d) wird die Häufigkeit, beispielsweise in Form einer (relativen oder absoluten) Anzahl, der Flüssigkeitsentnahmevorgänge bestimmt, die sich rechts von der zweiten Linie 17 des Anpassungswerts 3 befinden. Überschreitet die Häufigkeit einen vorgebbaren Häufigkeitswert in einer vorgebbaren Zeitspanne und/oder nach Erfassung einer vorgebbaren Anzahl erfasster Flüssigkeitsentnahmevorgänge, erfolgt in Schritt d) eine Anpassung des Alarmwerts 2 in Form einer Verschiebung der ersten Linie 16 nach rechts und/oder eine Verringerung der (bereits negativen) Steigung der ersten Linie 16. Unterschreitet die Häufigkeit einen vorgebbaren Häufigkeitswert oder liegt dieser sogar bei "0", erfolgt in Schritt d) eine Anpassung des Alarmwerts 2 in Form einer Verschiebung der ersten Linie 16 nach links und/oder eine Erhöhung der (negativen) Steigung der ersten Linie 16. Gleichzeitig kann bei einer Anpassung des Alarmwerts 2 bzw. dessen erster Linie 16 eine entsprechende Anpassung des Anpassungswerts 3 bzw. dessen zweiter Linie 17 erfolgen, bei der die zweite Linie 17 ebenfalls nach links oder rechts verschoben und/oder deren Steigung angepasst wird. Nach einer Anpassung könnte die erste Linie 16 des Alarmwerts 2 in dem unteren Bereich 5 beispielsweise von der xy-Koordinate 20 l/min / 15 min zu der xy-Koordinate 0,8 l/min / 120 min, in dem mittleren Bereich 6 beispielsweise von der xy-Koordinate 40 l/min / 7,5 min zu der xy-Koordinate 20 l/min / 15 min und in dem oberen Bereich 7 beispielsweise von der xy-Koordinate 50 l/min / 0 min zu der xy-Koordinate 40 l/min / 7,5 min verlaufen. Weiterhin könnten die zweite Linie 17 des Anpassungswerts nach der Anpassung in dem unteren Bereich 5 beispielsweise von der xy-Koordinate 20 l/min / 0 min zu der xy-Koordinate 0,8 l/min / 72 min, in dem mittleren Bereich 6 beispielsweise von der xy-Koordinate 40 l/min / 3 min zu der xy-Koordinate 20 l/min / 10,5 min und in dem oberen Bereich 7 beispielsweise von der xy-Koordinate 50 l/min / 0 min zu der xy-Koordinate 40 l/min / 6 min verlaufen. Weitere mögliche Anpassungen des Alarmwerts 2 und des Anpassungswerts 3 werden in Fig. 3 bis 6 schematisch gezeigt. Befindet sich ein Flüssigkeitsentnahmevorgang 1.1, 1.2, 1.3, 1.4 oberhalb der dritten Linie 18, übersteigt deren Durchflussgeschwindigkeit der Flüssigkeit in der Flüssigkeitsleitung 8 den ersten Schwellenwert 9, der hier 50 l/min beträgt. Dies würde auf einen Rohrbruch hindeuten, sodass das in der Fig. 7 gezeigte Ventil 12 in der Flüssigkeitsleitung 8 automatisch geschlossen wird. In diesem Fall kann eine entsprechende Mitteilung an einen Bewohner der Verbrauchseinheit gesendet werden. Die vierte Linie 19 repräsentiert einen zweiten Schwellenwert 10, der hier 300 I beträgt. Befindet sich ein Flüssigkeitsentnahmevorgang 1.1, 1.2, 1.3, 1.4 rechts von der vierten Linie 19, übersteigt dessen Durchflussmenge die maximal zulässige Durchflussmenge je Flüssigkeitsentnahmevorgang 1.1, 1.2, 1.3, 1.4, wodurch das in der Figur 7 gezeigte Ventil 12 in der Flüssigkeitsleitung 8 ebenfalls automatisch geschlossen wird. In diesem Fall kann ebenfalls eine entsprechende Mitteilung an einen Bewohner der Verbrauchseinheit gesendet werden.

Die Fig. 3 zeigt das Diagramm 4 nach einer ersten Anpassung des Alarmwerts 2 bzw. dessen erster Linie 16 und des Anpassungswerts 3 bzw. dessen zweiter Linie 17. Die Anpassung ist hier separat für den unteren Bereich 5, den mittleren Bereich 6 und den oberen Bereich 7 des dritten Bereichs 23 erfolgt, je nach Häufigkeit der in den Bereichen 5, 6 und 7 rechts neben der zweiten Linie 17 des Anpassungswerts 3 befindlichen Flüssigkeitsentnahmevorgänge 1.1, 1.2, 1.3, 1.4 (in der Fig. 3 nicht gezeigt). Die erste Linie 16 und die zweite Linie 17 verlaufen in den jeweiligen Bereichen 5, 6, 7 parallel zueinander und weisen den gleichen (horizontalen) Abstand auf wie vor der Anpassung. Die erste Linie 16 und die zweite Linie 17 verlaufen in den Bereichen 5, 6, 7 derart, dass sich diese an den Grenzen zwischen den Bereichen 5 und 6 sowie 6 und 7 nicht mehr berühren.

Die Fig. 4 zeigt das Diagramm 4 nach einer zweiten Anpassung des Alarmwerts 2 bzw. dessen erster Linie 16 und des Anpassungswerts 3 bzw. dessen zweiter Linie 17. Die Anpassung ist hier ebenfalls separat für den unteren Bereich 5, den mittleren Bereich 6 und den oberen Bereich 7 des dritten Bereichs 23 erfolgt, je nach Häufigkeit der in den Bereichen 5, 6 und 7 rechts neben der zweiten Linie 17 des Anpassungswerts 3 befindlichen Flüssigkeitsentnahmevorgänge 1.1, 1.2, 1.3, 1.4 (in der Fig. 4 nicht gezeigt). Die erste Linie 16 und die zweite Linie 17 verlaufen in den jeweiligen Bereichen 5, 6, 7 parallel zueinander und weisen den gleichen (horizontalen) Abstand auf wie vor der Anpassung. Die erste Linie 16 und die zweite Linie 17 verlaufen in den Bereichen 5, 6, 7 derart, dass sich diese an den Grenzen zwischen den Bereichen 5 und 6 sowie 6 und 7 weiterhin berühren.

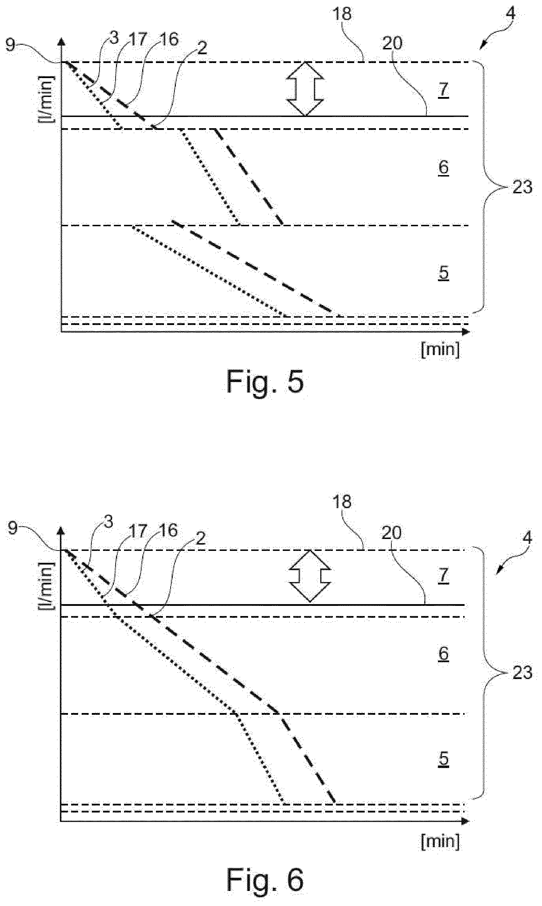

Die Fig. 5 zeigt das Diagramm 4 nach einer dritten Anpassung des Alarmwerts 2 bzw. dessen erster Linie 16 und des Anpassungswerts 3 bzw. dessen zweiter Linie 17. Die Anpassung ist hier ebenfalls separat für den unteren Bereich 5, den mittleren Bereich 6 und den oberen Bereich 7 des dritten Bereichs 23 erfolgt, je nach Häufigkeit der in den Bereichen 5, 6 und 7 rechts neben der zweiten Linie 17 des Anpassungswerts 3 befindlichen Flüssigkeitsentnahmevorgänge 1.1, 1.2, 1.3, 1.4 (in der Fig. 5 nicht gezeigt). Die erste Linie 16 und die zweite Linie 17 verlaufen nur in den Bereichen 5 und 6 parallel zueinander und weisen den gleichen (horizontalen) Abstand auf wie vor der Anpassung. Die erste Linie 16 und die zweite Linie 17 verlaufen in dem oberen Bereich 7 nicht parallel zueinander. Die erste Linie 16 und die zweite Linie 17 verlaufen in den Bereichen 5, 6, 7 derart, dass sich diese an den Grenzen zwischen den Bereichen 5 und 6 sowie 6 und 7 nicht berühren. Weiterhin wird in der Fig. 5 eine fünfte Linie 20 gezeigt. Befinden sich die Flüssigkeitsentnahmevorgänge 1.1, 1.2, 1.3, 1.4 mit einer Häufigkeit über einem vorgebbaren Häufigkeitswert oberhalb der fünften Linie 20, kann die Höhe der dritten Linie 18, d. h. der Wert für den ersten Schwellenwert 9 in Abhängigkeit von der Häufigkeit angepasst werden.

Die Fig. 6 zeigt das Diagramm 4 nach einer vierten Anpassung des Alarmwerts 2 bzw. dessen erster Linie 16 und des Anpassungswerts 3 bzw. dessen zweiter Linie 17. Die Anpassung ist hier ebenfalls separat für den unteren Bereich 5, den mittleren Bereich 6 und den oberen Bereich 7 des dritten Bereichs 23 erfolgt, je nach Häufigkeit der in den Bereichen 5, 6 und 7 rechts neben der zweiten Linie 17 des Anpassungswerts 3 befindlichen Flüssigkeitsentnahmevorgänge 1.1, 1.2, 1.3, 1.4 (in der Fig. 6 nicht gezeigt). Die erste Linie 16 und die zweite Linie 17 verlaufen nur in den Bereichen 5 und 6 parallel zueinander und weisen den gleichen (horizontalen) Abstand auf wie vor der Anpassung. Die erste Linie 16 und die zweite Linie 17 verlaufen in dem oberen Bereich 7 nicht parallel zueinander. Die erste Linie 16 und die zweite Linie 17 verlaufen in den Bereichen 5, 6, 7 derart, dass sich diese an den Grenzen zwischen den Bereichen 5 und 6 sowie 6 und 7 berühren. Weiterhin wird in der Fig. 6 ebenfalls die fünfte Linie 20 gezeigt. Befinden sich die Flüssigkeitsentnahmevorgänge 1.1, 1.2, 1.3, 1.4 mit einer Häufigkeit über einem vorgebbaren Häufigkeitswert oberhalb der fünften Linie 20, kann die Höhe der dritten Linie 18, d. h. der Wert für den ersten Schwellenwert 9 in Abhängigkeit von der Häufigkeit angepasst werden.

Die Fig. 7 zeigt schematisch eine Verbrauchseinheit 30 in Form eines Gebäudes mit einem Wasserzähler 11. Der Wasserzähler 11 ist in einer Flüssigkeitsleitung 8 angeordnet, mittels der Flüssigkeit von einer Flüssigkeitsquelle 26 zu einem Verbraucher 25 führbar ist. Der Wasserzähler 11 weist ein Ventil 12 nach Art eines Magnetventils auf, mittels dem die Flüssigkeitsleitung 8 zum Bilden eines Druckraums 31 in der Flüssigkeitsleitung 8 schließbar ist. Der Druckraum 31 erstreckt sich dabei von dem Ventil 12 bis zu dem Verbraucher 25. Weiterhin weist der Wasserzähler 11 einen Drucksensor 14 auf, mittels dem ein Druck und somit ein Druckabfall in dem Druckraum 31 nach dem Schließen der Flüssigkeitsleitung 8 mit dem Ventil 12 bestimmbar ist. Das Schließen der Flüssigkeitsleitung 8 mit dem Ventil 12 erfolgt, wenn durch einen Durchflusssensor 13 des Wasserzählers 11 ermittelt wurde, dass keine Flüssigkeitsentnahme über die Flüssigkeitsleitung 8 aus der Flüssigkeitsquelle 26 durch den Verbraucher 25 erfolgt. Das Ventil 12, der Durchflusssensor 13 und der Drucksensor 14 sind datenleitend mit einer Steuerung 15 des Wasserzählers 11 drahtlos oder per Funkverbindung verbunden. Die Steuerung 15 ist zur Durchführung des erfindungsgemäßen Verfahrens eingerichtet und vorgesehen.

Mit der vorliegenden Erfindung sind Leckagen mit einer höheren Zuverlässigkeit detektierbar.

### Bezugszeichenliste

- 1.1, 1.2, 1.3, 1.4: Flüssigkeitsentnahmevorgang
- 2: Alarmwert
- 3: Anpassungswert
- 4: Diagramm
- 5: unterer Bereich
- 6: mittlerer Bereich
- 7: hoher Bereich
- 8: Flüssigkeitsleitung
- 9: erster Schwellenwert
- 10: zweiter Schwellenwert
- 11: Wasserzähler
- 12: Ventil
- 13: Durchflusssensor
- 14: Drucksensor
- 15: Steuerung
- 16: erste Linie
- 17: zweite Linie
- 18: dritte Linie
- 19: vierte Linie
- 20: fünfte Linie
- 21: erster Bereich
- 22: zweiter Bereich
- 23: dritter Bereich
- 24: vierter Bereich
- 25: Verbraucher
- 26: Flüssigkeitsquelle
- 27: Graph
- 28: ein x-Achse
- 29: ein y-Achse
- 30: Verbrauchseinheit
- 31: Druckraum

## Patentansprüche

1. Verfahren zur Detektion einer Leckage, aufweisend zumindest die folgenden Schritte:
a) Erfassen einer Durchflussmenge einer Flüssigkeit durch eine Flüssigkeitsleitung (8) bei einer Vielzahl von Flüssigkeitsentnahmevorgängen (1.1, 1.2, 1.3, 1.4), wobei eine Durchflussgeschwindigkeit der Flüssigkeit und eine Durchflussdauer der Flüssigkeit je Flüssigkeitentnahmevorgang erfasst wird;
b) Vergleichen der Durchflussmengen der Flüssigkeit der jeweiligen Flüssigkeitsentnahmevorgänge mit einem Alarmwert (2);
c) Ausgabe eines Alarmsignals, wenn die Durchflussmenge der Flüssigkeit eines Flüssigkeitsentnahmevorgangs (1.1, 1.2, 1.3, 1.4) den Alarmwert (2) übersteigt;
d) Anpassen des Alarmwerts (2) in Abhängigkeit einer Häufigkeit des Auftretens der Durchflussmengen der Flüssigkeit der Flüssigkeitsentnahmevorgänge oberhalb eines Anpassungswerts (3), wobei die Detektion von Leckagen eine Messung eines Drucks der Flüssigkeit in der Flüssigkeitsleitung (8) umfasst, **dadurch gekennzeichnet, dass** zumindest der Anpassungswert (3) oder der Alarmwert (2) für eine Mehrzahl von Bereichen (5, 6, 7) der Durchflussgeschwindigkeit der Flüssigkeit separat anpassbar ist.

2. Verfahren nach Patentanspruch 2, wobei die Durchflussgeschwindigkeit der Flüssigkeit und die Durchflussdauer der Flüssigkeit je Flüssigkeitsentnahmevorgang in einem Diagramm (4) erfasst wird.

3. Verfahren nach Patentanspruch 2 oder 3, wobei bei einer Anpassung des Alarmwerts (2) in Schritt d) der Anpassungswert (3) in Abhängigkeit des Alarmwerts (2) angepasst wird.

4. Verfahren nach einem der vorhergehenden Patentansprüche, wobei die Detektion von Leckagen eine Messung einer Durchflussgeschwindigkeit der Flüssigkeit durch die Flüssigkeitsleitung (8) umfasst und wobei ein Alarmsignal ausgegeben wird, wenn die Durchflussgeschwindigkeit der Flüssigkeit einen ersten Schwellenwert (9) übersteigt.

5. Verfahren nach einem der vorhergehenden Patentansprüche, wobei ein Alarmsignal ausgegeben wird, wenn in Schritt a) die Durchflussmenge einen zweiten Schwellenwert (10) übersteigt.

6. Verfahren nach Patentanspruch 5 oder 6, wobei der erste Schwellenwert (9) oder der zweite Schwellenwert (10) einstellbar sind.

7. Wasserzähler (11), aufweisend ein Ventil (12), einen Durchflusssensor (13) für eine Flüssigkeit, einen Drucksensor (14) für die Flüssigkeit und eine Steuerung (15), wobei das Ventil (12), der Durchflusssensor (13) und der Drucksensor datenleitend mit einer Steuerung (15) verbunden sind, und
wobei die Steuerung (15) zur Durchführung des Verfahrens nach einem der vorhergehenden Patentansprüche eingerichtet ist.

## Claims

1. A method for detecting a leak, comprising at least the following steps:
a) capturing a flow volume of a liquid through a liquid line (8) in a multiplicity of liquid removal processes (1.1, 1.2, 1.3, 1.4), wherein a flow rate of the liquid and a flow duration of the liquid per liquid removal process are captured;
b) comparing the flow volumes of the liquid of the respective liquid removal processes with an alarm value (2);
c) outputting an alarm signal if the flow volume of the liquid of a liquid removal process (1.1, 1.2, 1.3, 1.4) exceeds the alarm value (2);
d) adapting the alarm value (2) on the basis of a frequency of the occurrence of the flow volumes of the liquid of the liquid removal processes above an adaptation value (3), wherein the detection of leaks comprises measuring a pressure of the liquid in the liquid line (8),
**characterized in that** at least the adaptation value (3) or the alarm value (2) is separately adaptable for a multiplicity of ranges (5, 6, 7) of the flow rate of the liquid.

2. The method according to claim 2, wherein the flow rate of the liquid and the flow duration of the liquid per liquid removal process are captured in a diagram (4).

3. The method according to claim 2 or 3, wherein, when adapting the alarm value (2) in step d), the adaptation value (3) is adapted on the basis of the alarm value (2) .

4. The method according to any one of the preceding claims, wherein the detection of leaks comprises measuring a flow rate of the liquid through the liquid line (8), and wherein an alarm signal is output when the flow rate of the liquid exceeds a first threshold value (9).

5. The method according to any one of the preceding claims, wherein an alarm signal is output when in step a) the flow volume exceeds a second threshold value (10).

6. The method according to claim 5 or 6, wherein the first threshold value (9) or the second threshold value (10) is adjustable.

7. A water meter (11), comprising a valve (12), a flow sensor (13) for a liquid, a pressure sensor (14) for the liquid, and a controller (15), wherein the valve (12), the flow sensor (13) and the pressure sensor are connected in a data-conducting manner to a controller (15), and wherein the controller (15) is configured to carry out the method according to any one of the preceding claims.

## Revendications

1. Procédé, destiné à détecter une fuite, comportant au moins les étapes suivantes, consistant à :
a) enregistrer un débit d'un liquide à travers une conduite (8) de liquide, lors d'une pluralité de processus (1.1, 1.2, 1.3, 1.4) de soutirage de liquide, une vitesse d'écoulement du liquide et une durée d'écoulement du liquide par processus de soutirage de liquide étant détectées ;
b) comparer les débits du liquide des processus de soutirage de liquide respectifs avec une valeur d'alerte (2) ;
c) délivrer un signal d'alerte si le débit du liquide d'un processus (1.1, 1.2, 1.3, 1.4) de soutirage de liquide dépasse la valeur d'alerte (2) ;
d) adapter la valeur d'alerte (2) en fonction d'une fréquence de production des débits du liquide des processus de soutirage de liquide au-delà d'une valeur d'adaptation (3), la détection de fuites comprenant une mesure d'une pression du liquide dans la conduite (8) de liquide,
**caractérisé en ce qu'**au moins la valeur d'adaptation (3) ou la valeur d'alerte (2) est adaptable séparément pour une pluralité de plages (5, 6, 7) de la vitesse de débit du liquide.

2. Procédé selon la revendication 2 du brevet, la vitesse d'écoulement du liquide et la durée d'écoulement du liquide pour chaque processus de soutirage de liquide étant enregistrées dans un diagramme (4).

3. Procédé selon la revendication 2 ou 3, lors d'une adaptation de la valeur d'alerte (2) à l'étape d), la valeur d'adaptation (3) étant adaptée en fonction de la valeur d'alerte (2).

4. Procédé selon l'une quelconque des revendications précédentes du brevet, la détection de fuites comprenant une mesure de la vitesse d'écoulement du liquide à travers la conduite (8) de liquide et un signal d'alerte étant délivré, si la vitesse de débit du liquide dépasse une première valeur seuil (9).

5. Procédé selon l'une quelconque des revendications précédentes du brevet, un signal d'alerte étant délivré si à l'étape a), le débit dépasse une deuxième valeur seuil (10).

6. Procédé selon la revendication 5 ou 6, la première valeur seuil (9) ou la deuxième valeur seuil (10) étant réglables.

7. Compteur d'eau (11), comportant une soupape (12), un capteur de débit (13) pour un liquide, un capteur de pression (14) pour le liquide et un système de commande (15), la soupape (12), le capteur de débit (13) et le capteur de pression étant connectés de manière à transmettre des données avec un système de commande (15), le système de commande (15) étant configuré pour réaliser le procédé selon l'une quelconque des revendications précédentes du brevet.
